# EUROPEAN PATENT APPLICATION

(11) **EP 3 432 274 A1**
(43) Date of publication of application: **23.01.2019**
(21) Application number: 18182134.9
(22) Date of filing: 06.07.2018
(51) Int. Cl.: G07B 15/04, G07C 9/00

(54) **AUTOMATED SECURED-AREA ACCESS SYSTEM FOR AN AUTOMATED VEHICLE**

(30) Priority: 19.07.2017 US 201715653832
(71) Applicant: Aptiv Technologies Limited, St. Michael (BB)
(72) Inventor: LAUR, Michael, H, MISSION VIEJO, CALIFORNIA 92692 (US); VIJAYAN, Indu, SUNNYVALE, CALIFORNIA 94086 (US)
(74) Representative: Robert, Vincent

(57) **Abstract**

A secured-area access system (10) for an automated vehicle includes an identification-device (24), an input-device (36), and a controller (42). The identification-device (24) conveys an access-authorization (26) from a host-vehicle (12) to a security-device (28). The input-device (36) receives instructions (38) regarding interaction with the security-device (28). The controller (42) is in communication with the identification-device (24) and the input-device (36). The controller (42) operates the identification-device (24) based on the instructions (38) to convey the access-authorization (26) to the security-device (28) when the host-vehicle (12) approaches the secured-area (20).

## Description

### TECHNICAL FIELD OF INVENTION

This disclosure generally relates to a secured-area access system, and more particularly relates to a system that operates an identification-device to convey an access-authorization (e.g. an access-code) to a security-device when a host-vehicle approaches a secured-area.

### BACKGROUND OF INVENTION

It is known to restrict vehicle access to parking facilities or government property to only vehicles operated by authorized persons. Unfortunately, an automated vehicle is often unable to access such secured facilities without some action on the part of an authorized occupant of the automated vehicle such as displaying identification and/or manually entering an access code or swiping an identification card.

### SUMMARY OF THE INVENTION

In accordance with one embodiment, a secured-area access system for an automated vehicle is provided. The system includes an identification-device, an input-device, and a controller. The identification-device conveys an access-authorization from a host-vehicle to a security-device. The input-device receives instructions regarding interaction with the security-device. The controller is in communication with the identification-device and the input-device. The controller operates the identification-device based on the instructions to convey the access-authorization to the security-device when the host-vehicle approaches the secured-area.

The instructions may be input to the input-device by an occupant of the host-vehicle, i.e. the instruction may be manually input to the input-device. The access-authorization may be indicative of an identity of an occupant. The system may include a location-detector that indicates when host-vehicle approaches the secured-area. The identification-device may include a transmitter that broadcasts the access-authorization to the security-device. The identification-device may include a reconfigurable-display that displays the access-authorization to the security-device. The identification-device may include an acoustic-transducer that emits the access-authorization to the security-device. The system may include a payment-device that communicates a payment to the security-device

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a secured-area access system in accordance with one embodiment; and
Fig. 2 is an illustration of a control-site that interacts with the system of Fig. 1 in accordance with one embodiment.

### DETAILED DESCRIPTION

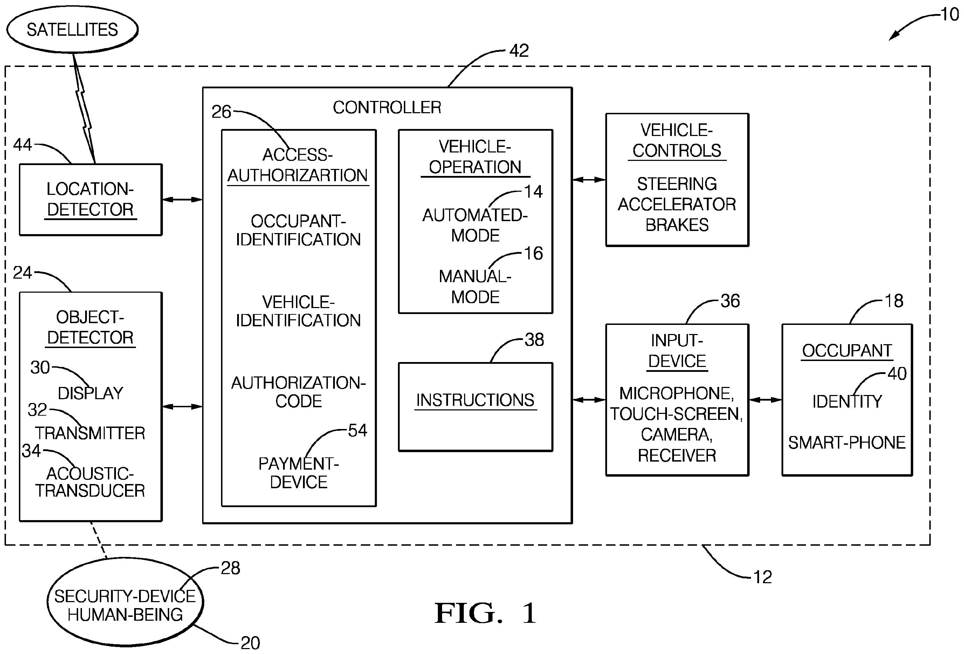

Fig. 1 illustrates a non-limiting example of a secured-area access system 10, hereafter referred to as the system 10. In general, the system 10 is configured for use by an automated vehicle, e.g. a host-vehicle 12, to automate interactions necessary for the host-vehicle 12 to gain access to a secured-area 20. As used herein, the term automated vehicle may apply to instances when the host-vehicle 12 is being operated in an automated-mode 14, i.e. a fully autonomous mode, where an occupant 18 (e.g. a human-operator) of the host-vehicle 12 may do little more than designate a destination in order to operate the host-vehicle 12. However, full automation is not a requirement. It is contemplated that the teachings presented herein are useful when the host-vehicle 12 is operated in a manual-mode 16 where the occupant 18 operates the steering, accelerator, and brakes of the host-vehicle 12, and the degree or level of automation may be little more than automating an authorization/identification process necessary for the host-vehicle 12 to enter the secured-area 20. It is also contemplated that the system 10 may be used when the host-vehicle 12 is not occupied by the occupant 18. For example, the host-vehicle 12 may be entering the secured-area 20 unoccupied for the purpose of picking up the occupant 18.

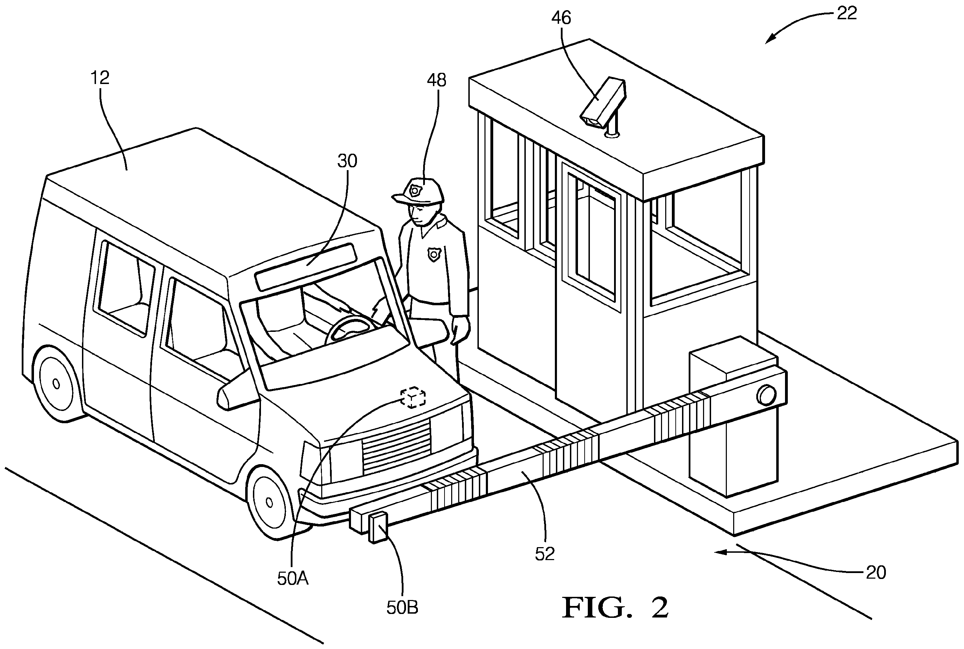

Fig. 2 illustrates a non-limiting example of a control-site 22 that controls access to the secured-area 20 beyond, i.e. forward with respect to the orientation of the host-vehicle 12, the control-site 22. As will be described by way of non-limiting examples below, the system 10 provides the means (i.e. equipment and/or method) to enable the host-vehicle 12 to operate/interact autonomously with various devices and/or means used at the control-site 22 to determine if the host-vehicle 12, and the occupant 18 (not shown in Fig 2) if present, should be allowed to enter the secured-area 20.

With reference to both Figs. 1 and 2, the system 10 includes an identification-device 24 that conveys an access-authorization 26 from the host-vehicle 12 to a security-device 28 that is typically part of, or located at, the control-site 22. The access-authorization 26 may consist of or include, but is not limited to, an occupant-identification, a vehicle-identification, an authorization-code, or any combination thereof. The occupant-identification may indicate the identity 40 of the occupant 18 if the occupant 18 is present in the host-vehicle 12, or may indicate the owner of the host-vehicle if the host-vehicle 12 is empty of any occupants, or may indicate who the host-vehicle 12 is contracted to pick-up as part of an automated-mobility-on-demand (AMOD) transportation contract. The authorization-code may also be a secret password that may be updated on a periodic basis.

The identification-device 24 may consist of or include, but is not limited to, a reconfigurable-display 30 (hereafter the display 30), a transmitter 32 such as a radio-frequency (RF) transmitter, an acoustic-transducer 34 (e.g. speaker), or any combination thereof. Accordingly, the security-device 28 may consist of or include, but is not limited to, a camera, an RF receiver, a microphone, or any combination thereof. Further details about the configuration of the identification-device 24 and the security-device 28 will be presented later is this document.

It is recognized that the host-vehicle 12 may encounter a variety of security-system configurations where each instance has unique requirements and/or procedures that must be adhered to for the host-vehicle 12 to be afforded access to the secured-area 20. In order for the host-vehicle 12 to 'learn' or be programmed with the unique requirements and/or procedures for a particular instance/configuration of the control-site 22, the system 10 includes an input-device 36 that receives instructions 38 regarding interaction with the security-device 28. The input-device 36 may consist of or include, but is not limited to, a microphone, a touch-screen, a camera, a receiver, or any combination thereof. The microphone may be used by the system 10 to receive the instructions 38 as voice-commands from the occupant 18. The touch-screen may be operated by the occupant 18 to select from a menu of options for the instructions 38, where the options may be stored in a security-system data-base located within the host-vehicle and/or located 'in the cloud'. The camera may be used by the system 10 to 'read' signage proximate to the control-site 22 that is relevant to the instructions 38. The receiver may be configured to receive the instructions 38 from a smart-phone that is owned by and/or operated by the occupant 18. The receiver may also be used to receive metadata from a personal area network, a local area network, or a wide area network. In this way, the mode, method, or process of security access information can be independently learned by the host vehicle 12. It is also contemplated that the instructions 38 may be received from a different vehicle that has previously, possibly independently, learned the security access mode from an external information database which stores accumulated and shared security access mode information.

In the above examples the instructions 38 are input to the input-device 36 by the occupant 18 of the host-vehicle 12. However, it is also contemplated that the instructions 38 may be down-loaded from a website or a secure database repository. For example, the camera may be used to 'read' a quick-reference (QR) code or text that indicates a uniform-resource-locator (URL), and the system 10 may access a website related to the QR code or URL to receive the instructions 38.

The system 10 also includes a controller 42 in communication with the identification-device 24 and the input-device 36. The controller 42 may include a processor (not specifically shown) such as a microprocessor or other control circuitry such as analog and/or digital control circuitry including an application specific integrated circuit (ASIC) for processing data as should be evident to those in the art. The controller 42 may include memory (not specifically shown), including non-volatile memory, such as electrically erasable programmable read-only memory (EEPROM) for storing one or more routines, thresholds, and captured data. The one or more routines may be executed by the processor to perform steps for executing the instructions 38 based on signals received by the controller 42 from the input-device 36 as described herein.

The controller 42 is programmed or configured to operate the identification-device 24 based on the instructions 38 to convey the access-authorization 26 to the security-device 28 when the host-vehicle 12 approaches the secured-area 20. In order for the system 10 to determine the location of the host-vehicle 12, the system may include a location-detector 44 such as a global-positioning-system (GPS) receiver that receives signals from satellites to determine the location of the host-vehicle with respect to a digital-map (not shown), as will be recognized by those in the art. The location detector may use objects from a map database and align those map objects with sensor detections from radars, lidars, cameras, ultrasonic transducers or other sensors to determine a location on a map. In instances when the occupant 18 manually enters the instructions 38, or is otherwise instrumental in the process of the controller 42 receiving the instructions 38, it is contemplated that the instructions for the particular instance of the control-site 22 at the location may be up-loaded to a network-server (i.e. stored 'in the cloud') to retain the instructions 38 for future use by other-vehicles that encounter the same instance of the control-site 22.

Returning now to non-limiting examples of various possible configurations of the identification-device 24 and the security-device 28, in one embodiment of the system 10 the identification-device 24 may be or include the display 30 that may be mounted on the host-vehicle 12 where it may be readily seen by a security-camera 46 and/or a human-being 48, i.e. a security-guard. The display 30 may convey the access-authorization 26 as text that can be read by the security-guard, or the access-authorization 26 may be a bar-code and/or a sequence of lights/colors that can be captured by the security-camera 46 and interpreted by a computer (not shown) that is part of the security-device 28 at the control-site 22.

If the identification-device 24 is or includes the transmitter 32, the transmitter 32 may broadcast a radio-frequency (RF) signal similar to that used to operate garage-door-openers. Alternatively, the transmitter 32 may be part of a transceiver that provides for bi-directional communication with the security-device 28 so that the system 10 has a more sophisticated security protocol than that associated with a garage-door-opener. It is also contemplated that if both the identification-device 24 and the security-device 28 are or include transceivers, then the instructions 38 may be conveyed to the host-vehicle 12 by the security-device 28 so that the occupant 18 and/or the host-vehicle 12 will be more readily identified during some future instance of the host-vehicle 12 arriving at the control-site 22.

If the identification-device 24 is or includes the acoustic-transducer 34, that device may be a speaker that conveys an audible form of the access-authorization 26 to the security-guard 48. Alternatively, the acoustic-transducer 34 may be an ultrasonic-transducer 50A (Fig. 2) mounted on the exterior of the host-vehicle 12 and positioned so that it aligns with a corresponding instance of an ultrasonic-transducer 50B at the control-site 22. When the host-vehicle 12 approaches the gate-arm 52 (likely closer than illustrated in Fig. 2), the ultrasonic-transducer 50A and the ultrasonic-transducer 50B may be used by the system 10 to communicate the access-authorization 26 and/or the instructions 38. Using ultrasonic-transducers may provide for enhanced security because the signals from such devices are relatively short ranged so would be difficult for some unauthorized persons to intercept the communication between the ultrasonic-transducer 50A and the ultrasonic-transducer 50B. Decreased power levels of RF could also be used to limit the range of the system. In systems where a secured wired access is required, a physical coupler could transmit the access information.

The system 10 may also include a payment-device 54 (Fig. 1) that communicates a payment from the host-vehicle 12 or the occupant 18 to the security-device. The payment may be necessary if the secured-area is a parking-lot, or if the host-vehicle is being rented by the occupant 18

Accordingly, a secured-area access system (the system 10), a controller 42 for the system 10, and a method of operating the system 10 is provided. The system 10 provides the means by which the security of a secured-area 20 can be maintained while automating the authorization process by removing much of the burden to the occupant 18 to, for example, show identification, enter a security-code into a key-pad at a control-site 22, or inefficiently communicate verbally with a human-being 48 such as security-guard.

While this invention has been described in terms of the preferred embodiments thereof, it is not intended to be so limited, but rather only to the extent set forth in the claims that follow.

## Claims

1. A secured-area access system (10) for an automated vehicle, said system (10)
comprising:
an identification-device (24) that conveys an access-authorization (26) from a host-vehicle (12) to a security-device (28);
an input-device (36) that receives instructions (38) regarding interaction with the security-device (28); and
a controller (42) in communication with the identification-device (24) and the input-device (36), wherein the controller (42) operates the identification-device (24) based on the instructions (38) to convey the access-authorization (26) to the security-device (28) when the host-vehicle (12) approaches the secured-area (20).

2. The system (10) in accordance with claim 1, wherein the instructions (38) are input to the input-device (36) by an occupant (18) of the host-vehicle (12).

3. The system (10) according to any one of the preceding claims, wherein the access-authorization (26) is indicative of an identity (40) of an occupant (18).

4. The system (10) according to any one of the preceding claims, wherein the system (10) includes a location-detector (44) that indicates when host-vehicle (12) approaches the secured-area (20).

5. The system (10) according to any one of the preceding claims, wherein the identification-device (24) includes a transmitter (32) that broadcasts the access-authorization (26) to the security-device (28).

6. The system (10) according to any one of the preceding claims, wherein the identification-device (24) includes a reconfigurable-display (30) that displays the access-authorization (26) to the security-device (28).

7. The system (10) according to any one of the preceding claims, wherein the identification-device (24) includes an acoustic-transducer (34) that emits the access-authorization (26) to the security-device (28).

8. The system (10) according to any one of the preceding claims, wherein the system (10) includes a payment-device (54) that communicates a payment to the security-device (28).
